# EUROPEAN PATENT SPECIFICATION

(11) **EP 3 745 813 B1**
(45) Date of publication and mention of the grant of the patent: **22.01.2025**
(21) Application number: 19305702.3
(22) Date of filing: 31.05.2019
(51) Int. Cl.: H04W 84/20, H04W 4/80, H04W 52/02

(54) **METHOD FOR OPERATING A BLUETOOTH DEVICE**
VERFAHREN ZUM BETRIEB EINER BLUETOOTH-VORRICHTUNG
PROCÉDÉ DE FONCTIONNEMENT D'UN DISPOSITIF BLUETOOTH

(43) Date of publication of application: 02.12.2020
(60) Divisional application: 24202632.6
(73) Proprietor: Google LLC, Mountain View, CA 94043 (US)
(72) Inventor: SOULIER, Antoine, 78420 Carrieres Sur Seine (FR); GIRARDIER, Thomas, 92340 Bourg La Reine (FR)
(74) Representative: Maikowski & Ninnemann Patentanwälte Partnerschaft mbB

(56) References cited:
- EP-A1- 2 292 062
- EP-B1- 2 292 062
- CN-A- 107 708 192
- US-A1- 2016 359 925

## Description

### BACKGROUND OF THE INVENTION

The present invention relates to wireless communication, and more specifically to a method for dynamically modifying configuration of a communication link between a Bluetooth source device and a Bluetooth multimedia (audio or video) sink device.

By "configuration", it is meant a set of parameters that determines how data are transmitted between the source device and the sink device. These parameters are referred to as "configuration parameters". By "modifying configuration", it is meant modifying one or several configuration parameters among the set of configuration parameters.

In one or several embodiments, the Bluetooth sink device may be a Bluetooth loudspeaker. By "loudspeaker", it is meant any electroacoustic transducer, which converts an electrical audio signal into a corresponding sound. The term "loudspeaker" includes for instance audio speakers of a stereo system, headphones, earbuds, hearing aids, etc. The audio source device (or simply "source device", or "source") may be, for instance, a mobile phone, a portable game player, a portable media player, a computer, a tablet, a television, a control device of a stereo system, etc. In the following, the source device may also be referred to as "master device".

Bluetooth is a communication standard that is well-known to the person skilled in the art, managed by a group of organizations (Bluetooth SIG) that has issued successive versions. Bluetooth enables a short-distance bidirectional exchange of data (this is a piconet network, which designates a network covering a personal zone). Therefore, the range of Bluetooth equipment is limited to a few tens of meters. Bluetooth uses radio waves that are situated in the UHF band (between 300 MHz and 3 GHz). Bluetooth aims to simplify connections between electronic devices by removing cable connections. Thus Bluetooth enables cables between a source multimedia device (hi-fi system, car radio, computer, tablet, mobile telephone, etc.) to be replaced by wireless communications and multimedia sink devices such as speakers arranged to play a received multimedia stream. Bluetooth speakers have met with a certain success due to their high portability.

In general, the configuration of a Bluetooth link between a source device and a sink device is determined when the connection is established, and is not modified after. For instance, the master device may send a request to obtain the audio capabilities of the sink device and, based on the response, select the suitable audio parameters of the link.

Some methods have been proposed in the prior art to adapt dynamically the audio bit rate based on the available Bluetooth bandwidth. For instance, US 8,031,658 proposes to dynamically change the bit rate used in the Codec based on conditions of the Bluetooth connection. US 2013/0304458 relates to a source device wherein the controller is adapted for changing audio parameters based on the bandwidth between the communicating Bluetooth devices.

In other words, techniques of the prior only propose to dynamically adapt audio parameters based on connection parameters, in order to avoid audio choppiness and to improve the user experience.

Other examples and embodiments of the prior art are presented in the documents US2016 / 359925 A1 and EP 2 292 062 A1. Further, reference CN 107 708 192 A discloses a method and device for automatically switching a working mode of a Bluetooth connection.

However, there may be other situations in which it would be interesting to dynamically modify the configuration of the link, because the configuration adopted when establishing the connection between the Bluetooth devices may not be the most suitable in such situations.

An object of the present disclosure is therefore directed to a method for dynamically changing configuration (not only audio parameters) of a communication link between a Bluetooth source device and a Bluetooth multimedia sink device based on parameters that are not necessarily connection parameters.

### SUMMARY OF THE INVENTION

The invention is defined by an independent method claim 1, a corresponding apparatus claim 9, and a corresponding non-transitory computer readable storage medium claim 16. The method comprises:
transporting audio information over a Bluetooth communication link established with a second device;
determining, upon a change of value of an operational parameter in either the Bluetooth device or the second device, a new operating mode for said Bluetooth communication link;
modifying a configuration parameter of said Bluetooth communication link based on the new operating mode;
transporting audio information on said Bluetooth communication link according to the modified configuration parameter;
wherein the operational parameter is a launch of a tagged gaming or real-time video application on the Bluetooth device or the second device and the new operating mode is a low-latency mode.

By "Bluetooth communication link", it is meant a communication link established according any Bluetooth protocol (as described for instance in the Bluetooth Core Specification version 5.1 or in earlier versions of the Bluetooth Core Specification), including Bluetooth BR/EDR (Bluetooth Basic Rate/ Enhanced Data Rate), but also Bluetooth low energy (LE).

In one or several embodiments, the operational parameter may be associated with an operating system running on the Bluetooth device or the second device.

Alternatively, the operational parameter may be associated with an application running on the Bluetooth device or the second device.

In one or several embodiments, the modifying of the configuration parameter may be performed by a Bluetooth Host.

Alternatively, the modifying of the configuration parameter may be performed by a Bluetooth Controller.

In one or several embodiments, the configuration parameter may be one of:
an audio configuration parameter, or
a Bluetooth connection parameter.

For instance, the configuration parameter may be one audio configuration parameter among:
a type of codec,
a parameter relative to a codec,
a type of data,
an audio channel selection parameter, or
a sampling rate parameter.

Alternatively, the configuration parameter may be one Bluetooth connection parameter among:
a Flush Timeout parameter,
a channel type parameter,
a quality of service parameter,
a number of retransmission parameter,
a parameter among BLE link parameters,
a packet type parameter, and
a Maximum Transmission Unit, MTU, parameter.

The Bluetooth device comprises a Bluetooth chip, a processor and a memory configured to:
transport audio information over a Bluetooth communication link established with a second device;
determine, upon a change of value of an operational parameter in either the Bluetooth device or the second device, a new operating mode for said Bluetooth communication link;
modify a configuration parameter of said Bluetooth communication link based on the determined new operating mode;
transport audio information on said Bluetooth communication link according to the modified configuration parameter;
wherein the operational parameter is a launch of a tagged gaming or real-time video application on the Bluetooth device or the second device and the new operating mode is a low-latency mode.

In one or several embodiments, the operational parameter may be associated with an operating system of the Bluetooth device or the second device.

Alternatively, the operational parameter may be associated with an application running on the Bluetooth device or the second device.

In one or several embodiments, the Bluetooth device may further comprise a Bluetooth Controller and the modifying of the configuration parameter may be performed by the Bluetooth Controller.

The Bluetooth device may further comprise a Bluetooth Host, and, alternatively, the modifying of the configuration parameter may be performed by the Bluetooth Host.

In one or several embodiments, the operational parameter may be one of:
a battery level,
a reading mode of a multimedia content, or
a quality of a multimedia content.

In one or several embodiments, the configuration parameter may be one of:
an audio configuration parameter, or
a Bluetooth connection parameter.

For instance, the operational parameter may be one audio configuration parameter among:
a type of codec,
a parameter relative to a codec,
a type of data,
an audio channel selection parameter, or
a sampling rate parameter.

Alternatively, the operational parameter may be one Bluetooth connection parameter among:
a Flush Timeout parameter,
a channel type parameter,
a quality of service parameter,
a number of retransmission parameter,
a parameter among BLE link parameters,
a packet type parameter, and
a Maximum transmission unit, MTU, parameter.

The non-transitory computer readable storage medium has stored thereon a computer program comprising program instructions, the computer program being loadable into a data-processing unit and adapted to cause the data-processing unit to carry out the steps of the above method when the computer program is run by the data-processing device. Types of non-transitory computer readable storage medium used in certain embodiments of the invention include magnetic hard disk drives (HDD), fixed optical storage media, field programable gate arrays (FPGA), programmable read-only memory (ROM) or flash-RAM devices. These non-transitory computer readable storage medium may be stand-alone or part of a larger Bluetooth enabled system.

Other features and advantages of the method and apparatus disclosed herein will become apparent from the following description of non-limiting embodiments, with reference to the appended drawings.

### BRIEF DESCRIPTION OF THE DRAWINGS

The present invention is illustrated by way of example, and not by way of lim itation, in the figures of the accompanying drawings, in which like reference numerals refer to similar elements and in which:
- Figure 1 is a flow chart describing a possible embodiment of the present invention;
- Figure 2 is a representation of a first possible embodiment of the present invention;
- Figure 3 is a representation of a second possible embodiment of the present invention;
- Figure 4 is a representation of a third possible embodiment of the present invention;
- Figure 5 is a representation of a fourth possible embodiment of the present invention;
- Figure 6 is a possible embodiment for a device that enables the present invention.

### DESCRIPTION OF REFFERED EMBODIMENTS

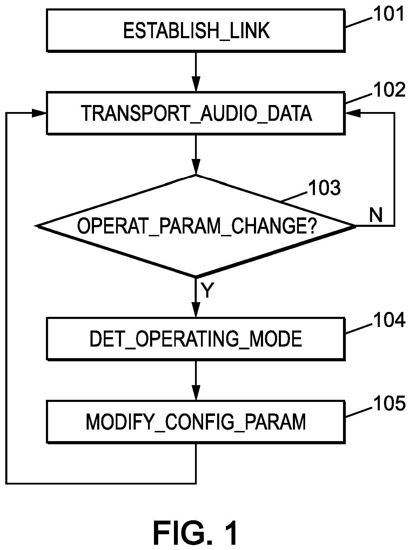

Figure 1 is a flow chart describing a possible embodiment of the present invention.

The steps of the flow chart of Fig. 1 may be performed by the master device and/or by the sink device.

In a first step 101, a wireless communication link is established between the master device and the sink device. This wireless communication link may be a Bluetooth link using the Advanced Audio Distribution Profile (A2DP) constructed from several layers defined by the Bluetooth standard.

Audio information is therefore transported 102 over the established communication link. For instance, the audio information may be an audio or a stereo stream including packets incorporating audio data.

The device implementing the method may further be configured to detect 103 a change of an operational parameter of at least one Bluetooth device among the master device and the sink device.

This change may occur on the side of the master device or on the side of the sink device, whatever the device implementing the method. For instance, the master device may detect a change of one of its operational parameter, but also a change of an operational parameter of the sink device.

As long as no change of an operational parameter is detected (step 103, "N"), the configuration of the wireless communication link between the master device and the sink device is not modified and audio data continues to be transported 102 on this communication link, according to this configuration.

When a change of an operational parameter is detected (step 103, "Y"), a new operating mode is determined 104 for the communication link between the master device and the sink device.

The configuration of the communication link is then changed based on the determined operating mode, for the data to be transmitted between the master device and the source device according to this operating mode. To this purpose, at least one configuration parameter of the communication link is modified 105. The audio data is then sent/received 102 on this reconfigured link.

By "operational parameter" of a Bluetooth device, it is meant a parameter relating to the operation of the Bluetooth device, for instance a parameter relating to the operating system running on the Bluetooth device.

In one or several embodiments, the operational parameter of a Bluetooth device may be associated with an application running on the Bluetooth device. In that case, the Bluetooth device is usually the master device, i.e. the operational parameter is associated with an application running on the master device. The parameter is a type of application (gaming or video streaming) launched or ended on the Bluetooth device, or a specific application launched on the Bluetooth device (e.g. the user is using Spotify^{®} and launches Youtube^{®} on his smartphone).

Indeed, it may be advantageous to modify the configuration of the link when using a specific application or a specific type of application. For example, two streaming applications may not have the same sampling rates, and it may be advantageous to reconfigure the Bluetooth audio link so its sampling rate matches the one of the applications currently launched on the Bluetooth device (and therefore avoid resampling before sending the audio packets). A gaming application may require to activate a low latency mode.

In one or several embodiments, the operational parameter may be related to a multimedia content played by a Bluetooth device, which is usually the master device.

By "operating mode", it is meant a mode relating to a hardware component of one of the master device and the sink device, or a mode for transmitting data from one device to another. For instance, the operating mode may be relating to a power consumption of the master or the sink device (e.g. a power-saving mode), to a quality of the content (e.g. High-Quality mode), to a latency, etc.

The "configuration" of a communication link between a source device and a sink device corresponds to a set of configuration parameters that determines how data are transmitted between the source device and the sink device. These configuration parameters may comprise Bluetooth connection parameters associated with the wireless communication link, and applicative parameters.

By Bluetooth connection parameters, it is meant parameters related to low-level building blocks defined by the Bluetooth standard, such as the "Baseband" building block, the "LMP" ("Link Manager Protocol") building block, the "L2CAP" ("Logical Link Control and Adaptation Protocol") building block, or the "SDP" ("Service Discovery Protocol"). For instance, the Bluetooth parameters may include the number of retransmission, the packet type, the MTU, the FTO (or "Flush Timeout") value, which defines the expiration period for a data packet in a buffer memory of a source device, a QoS ("Quality of service") parameter, which defines the maximum latency between the inclusion of a packet to be transmitted in a L2CAP channel and its effective transmission, etc.

By applicative parameters it is meant parameters related to a chosen application, i.e. related to the application layer. In the Bluetooth standard, audio transmission is defined by the Advanced Audio Distribution Profile (A2DP). The A2DP profile is based on the Audio/Video Distribution Transport Protocol (AVDTP) building block which defines the procedures between Bluetooth devices for establishing the audio stream, negotiating the audio stream parameters and transmitting the audio stream data. Therefore, in case of audio transmission, the applicative parameters may be audio configuration parameters and may comprise:
- the type of coder/decoder (Codec) to be used for encoding audio data to be sent or for decoding received audio data: according to the Bluetooth protocol, SBC (for "Low Complexity Subband Codec") is the only codec that has to be supported by any Bluetooth device, but other Codecs may be used, such as AAC (for "Advanced Audio Coding"), LDAC or Apt-X. The choice of the type of codec may improve or decrease the audio content quality;
- parameters relative to the Codec: for example, the bit rate, the channel configuration (mono, stereo or joint-stereo), etc.;
- the type of audio data to transmit for each audio channel: for instance, "Left", "Right", or a combination of both (for instance (Left + Right) / 2);
- the sampling rate;
- etc.

It is noted that the determination of the new operating mode in case of a change of an operational parameter may be triggered automatically (e.g. if the battery level is under a predefined threshold or if the derivative of the battery level is under a predefined threshold, the saving-power mode is automatically activated), or manually, by a user action (e.g. when a user starts a game, a "gaming mode" may be activated, or when a user ends a game, the operating mode may switch from a "gaming mode" into a "standard mode").

The modification of configuration of the communication link based on the determined operating mode may be done in several ways. In one or several embodiments, the "reconfigure command" of AVDTP (defined in the AVDTP specification) may be used. This command allows devices participating within a stream to change Application Service Capabilities.

For instance, the following procedure may be used. First, a "Suspend Streaming Procedure" may be performed for suspending the stream. Then, a Reconfigure Command may be used for changing current capability settings. After the reconfiguration, the streaming may be restarted by using the "Start Streaming Procedure".

Other techniques may be used for reconfiguring the communication link, which do not require suspending the streaming procedure (for instance by changing the bitpool of the SBC codec to reduce the bitrate). Thus, the communication link is dynamically reconfigured without interrupting the streaming.

For illustration purposes only, some examples of the method of Fig. 1 are provided below. Some of these examples are based on the table below, presenting different possible operating modes.

**Tab 1. Examples of operational modes**

| **Operational parameters** | **Operating Mode** | **Link configuration** |
|---|---|---|
| Battery low event on the master or slave, or user manual input | Power-saving mode | Low complexity codec, low bitrate, bursty packet scheduling |
| Start of a tagged gaming or real-time video application (PUBG, Fortnite), or user manual input | Low-latency mode | Low-latency codec, few retransmissions, precise packet scheduling to avoid bursts |
| Start of a tagged audio application (Spotify, Apple Music), or user manual input | High-Quality mode | High-Quality codec, maximal bitrate, maximum retransmissions |
| End of a previous operating mode (end of a gaming/audio application, battery not low) | Standard mode | Default configuration |

It is assumed that a wireless communication link is already established 101 and used to transport 102 audio data.

In a first example, the operational parameter is a battery level (of the master device or of the sink device). At step 103, the Bluetooth device performing the method may determine that the battery level falls under a predefined threshold. At step 104 it is determined that the current operating mode of the communication link may be modified into a "power-saving mode". In consequence, at least one of the following configuration parameters may be modified (step 105):
- a codec complexity: for example, a codec having a lower complexity, i.e. based on codec compression techniques requiring less processing power, may be used;
- a codec bit rate: for example, a codec having a lower bit rate may be used;
- a packet scheduler: for example, a packet scheduler adapted for bursty traffic may be used. By "bursty traffic" it is meant that the scheduler of the master device buffers more audio data before sending it in one large packet or multiple successive packets, thus allowing the chipset of the earbuds/smartphone to sleep in between (for instance using the sniff or hold mode of the Bluetooth protocol).

Other configuration parameters may be modified (step 105), for instance one parameter among:
- a data rate of audio information transmitted over the wireless communication link,
- a sampling rate of audio information transmitted over the wireless communication link;
- any audio configuration parameter for audio data transmitted over the wireless communication link: for instance, a codec type, a codec related parameter, a data type, an audio channel selection parameter, a sampling rate parameter, etc.

According to the invention, operational parameter is a type of application. When it is detected at step 103 that the type of application launched on the master device is a gaming or real-time video application, it is determined at step 104 that the current operating mode of the communication link is modified into a "low-latency mode". In consequence, at least one of the following configuration parameters may be modified (step 105):
- a codec latency: a codec with a low latency may be used. This may be achieved, for instance, by using a codec with high quality (and high bandwidth), i.e. associated with a high Mean Opinion Score (MOS), like G.711, since such codec is usually configured to incur the least encode-decode latency;
- a number of retransmissions: this number may be chosen to be small;
- a packet scheduler: for example, a packet scheduler adapted for avoiding bursty traffic may be used for the master device. Such scheduler prefers small packets to be sent just in time, to avoid having to buffer too much (which would increase latency).

Still in the case where the operational parameter is a type of application, when it is detected at step 103 that a type of application (e.g. gaming, audio or real-time video application) is ended on the master device, it may be determined at step 104 that the current operating mode of the communication link may be switched into a "standard mode", with default configuration parameters.

Such "standard mode" may also be used in the case where the operational parameter is a battery level, and when it is detected at step 103 that the battery level again exceeds a predefined threshold.

In yet another example, the operational parameter is a specific audio application (Spotify^{®}, Apple Music^{®}). When it is detected at step 103 that one specific audio application is started on the master device, it may be determined at step 104 that the current operating mode of the communication link may be switched into a "high-quality mode". In consequence, at least one of the following configuration parameters may be modified (step 105):
- a codec quality: a codec with high quality (and high bandwidth), i.e. associated with a high MOS, may be used;
- a codec bit rate: for example, a codec having a maximal bit rate may be used;
- a number of retransmissions: this number may be chosen to be maximal.

According to yet another example, when the change 103 of an operational parameter corresponds to a change in an audio source from a highly compressed source to a less compressed source, the modification 105 of a configuration parameter may comprise:
- changing a codec configuration parameter from higher compression to a lower compression and increasing a throughput parameter for the wireless communication link; and/or
- increasing the MTU for the wireless communication link.

According to yet another example, when the master device is a smartphone and the slave system 201 comprises two earbuds, the change 103 of an operational parameter may correspond to a change in the local source of audio data from a higher quality source to a lower quality source. The wireless communication link may then be reconfigured from a higher quality link with a higher data rate to a lower quality link having a reduced data rate in response to the change.

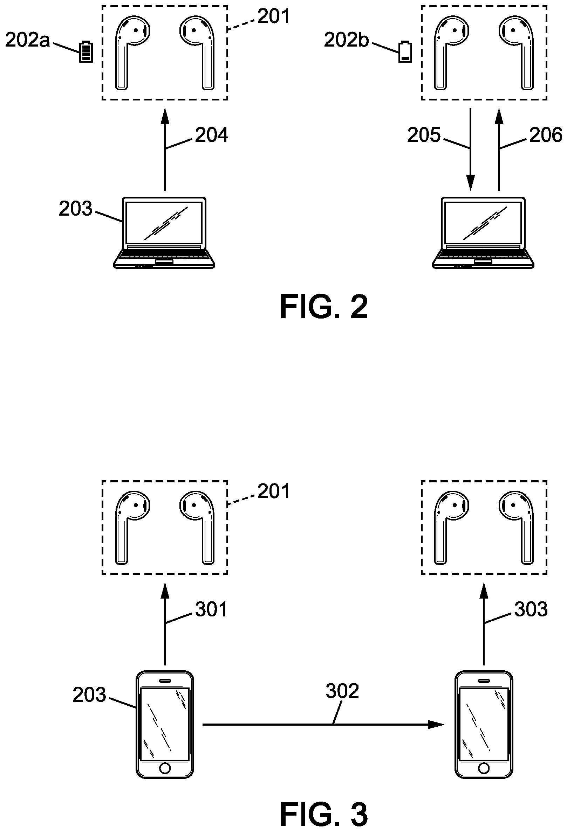

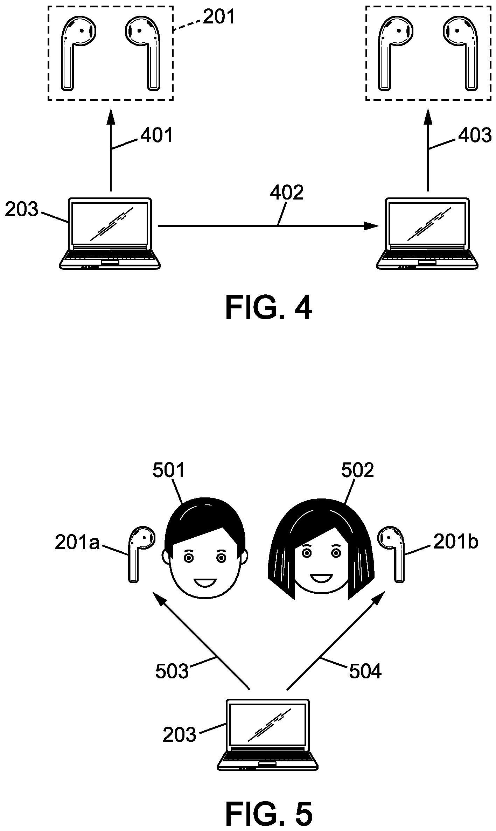

Figures 3 and 4 represent different possible embodiment of the present invention.

In Fig. 2, 3 and 4, the master device 203 may be an audio or video source device such as a computer, a tablet device or a smartphone. The master device 203 may be connected to a slave system 201 comprising at least one sink device. The slave system may be for instance a Bluetooth earbud / earphone, a pair of Bluetooth earbuds / earphones, a Bluetooth loudspeaker or a plurality of Bluetooth loudspeakers.

When there is a plurality of sink devices (e.g. a pair of earbuds), the master device 203 may comprise a Bluetooth chip (not represented in Figure 2) arranged to generate several SEPs to control the sink devices 201 by creating a point-to-multipoint link between the master device 203 and the plurality of sink devices 201. For instance, the Bluetooth chip may generate a distinct Source SEP for each Sink SEP (corresponding to each Bluetooth sink device that it must control). This configuration seemingly consists in point-to-point links, from the source 203 to each of the sink devices 201. For example, and for this implementation, it is referred to application EP17182123.4, which proposes a Bluetooth chip configured to implement a modified A2DP profile so as to create such point-to-multipoint link. In such embodiment, each link from the master device 203 to each of the sink devices may be reconfigured.

Of course, other solutions may be used for controlling a plurality of sink devices 201 from a master device 203.

For instance, a chained connection may be established between the master device 203, a first earbud and a second earbud (in case of a pair of earbuds 201). The first earbud may be connected to the master device 203 according to a first wireless link, for instance a Bluetooth link using the Advanced Audio Distribution Profile (A2DP). A stereo stream including packets incorporating stereo data for both left and right channels may be transmitted from the master device 203 to the first earbud. The first earbud may be configured:
- to play only the audio data relative to one of the two channels (for instance, the left channel), and
- to send the mono audio data relative to the other channel to the second earbud, via a second wireless link, which may be for instance a Bluetooth link (for instance, True Wireless Stereo), or a Near Field Magnetic Induction (NFMI) link.

Another solution may consist in a wireless link from the master device 203 to one of the two earbuds, while the other earbud is configured to "sniff" (or "snoop") the wireless link. According to this solution, the first earbud may be connected to the master device 203 according to a first wireless link, for instance a Bluetooth link using the Advanced Audio Distribution Profile (A2DP). A stereo stream including one or more packets incorporating stereo data for both left and right channels may be transmitted from the master device 203 to the first earbud. On the other hand, the first earbud may be connected to the second earbud according to a second wireless link (a Bluetooth link for instance). The first earbud and the second earbud can exchange some parameters, including sniffing/decoding parameters for allowing the second earphone to sniff the first link and to retrieve the audio data relative to the right channel. However, no audio data is exchanged via the second link. According to this solution, the second earbud is not connected to the master device 203, and is configured to sniff the first wireless link.

In one or several embodiments, the master device 203 may be configured for transmitting audio information to a slave device 201 and may comprise:
- a radio frequency processing circuit for converting signals received from the slave device 201 into incoming digital data, and for converting outgoing digital data into signals that are transmitted to the slave device 201, the outgoing digital data including audio-related information;
- a battery for storing power and having a power level;
- a battery monitoring circuit for detecting the power level of the battery;
- a processor for running an operating system layer including an application monitoring process and a Bluetooth controlling process, said controlling process being configured to perform the operating method of the present invention.

For instance, the master device 203 may be a Smartphone for transmitting audio information to a pair of earbuds 201, the earbuds comprising a left earbud and a right earbud, the master device comprising:
- a radio frequency unit for receiving signals from the earbuds and for transmitting signals to the earbuds;
- a battery for storing power and having a power level;
- a battery monitoring unit for detecting the power level of the battery;
- a processor unit for running an operating system layer including an application monitoring process and a Bluetooth controlling process, said controlling process being configured to perform the operating method of the present invention.

Figure 2 is a representation of an example not according to the invention.

The slave system 201 may be configured for supporting different types of codecs (e.g. SBC, LDAC, Apt-X, etc.), wherein each codec may be associated to one or several possible bit rates (e.g. LDAC at 990 kbits/s, kbps, or 660 kbps). Alternatively, the slave system 201 may be configured for supporting one type of codec, at different possible bit rates.

The slave system 201 has a battery level 202a, 202b and is configured to send a low battery signal to the master device 203 when the battery level 202a, 202b falls under a predefined threshold (e.g. 20% of the maximum battery level). For instance, the low battery signal may be sent by using a BLE (Bluetooth Low Energy) transmission or AVRCP (Audio/Video Remote Control Profile) profile.

In this example, the operational parameter is the battery level 202a, 202b, of the slave system 201. The fact that the battery level 202a, 202b falls below the predefined threshold corresponds to the change of the operational parameter, as defined above with reference to Fig. 1. The new operating mode may be a power-saving mode, and the reconfiguration of the link (or the links in case of point-to-multipoint transmission) may include modifying the type of codec and/or the bit rate (e.g. reducing the bit rate).

According to an example, while the battery level 202a of the slave system 201 is above a predefined threshold, the master device 203 may send 204 to the slave system 201 audio packets processed via a first codec type (e.g. stereo LDAC at 990 kbps). When the battery level 202b of the slave system 201 falls under the predefined threshold, the slave system 201 sends 205 a low battery signal to the master device 203. Upon reception 205 of this low battery signal, it is determined, at the master device 203, that the Bluetooth audio link has to be switched into a power-saving mode, in which the audio packets to be sent 206 to the slave system 201 are processed via a second codec type (e.g. stereo SBC at 328 kbps).

Optionally, upon reception 205 of the low battery signal, a message may be displayed on a screen of the master device 203 for requesting a confirmation from the user that the master device 203 may be switched into the power-saving mode. In this case, the modification of the configuration of the link / links is triggered by an explicit action of the user.

Alternatively, the master device 203 may be automatically switched into the power-saving mode, without any confirmation of the user. In this case, the modification of the configuration of the link / links is triggered without any action of the user.

According to another example, while the battery level 202a of the slave system 201 is above a predefined threshold, the master device 203 may send 204 to the slave system 201 audio packets processed via a first codec type (e.g. stereo LDAC at 990 kbps). When the battery level 202b of the slave system 201 falls under the predefined threshold, it is determined, at the slave system 201, that the communication link has to be switched into a power-saving mode. The slave system 201 may then send to the master device 203 information relative to configuration parameter(s) modified based on this new operating mode. After receiving the information, the master device 203 may process audio packets with a second codec type before sending them to the slave system 201.

Of course, a similar reconfiguration method may be applied in the case where the operational parameter is the battery level of the master device 203. In such case, a low-power level of the battery of the master device 203 may be detected. Upon such detection, some configuration parameters may be modified. For instance, a data rate for the wireless link may be reduced.

Figure 3 is a representation of an embodiment of the present invention.

The slave system 201 may be configured for supporting different types of codecs (e.g. SBC, LDAC, Apt-X, etc.), wherein each codec may be associated to one or several possible bit rates (e.g. LDAC at 990 kbit/s, kbps, or 660 kbps). Alternatively, the slave system 201 may be configured for supporting one type of codec, at different possible bit rates.

In this embodiment, the operational parameter is a specific application launched on the master device 203. A change of the operational parameter is detected when the user changes the application launched on the master device 203 (for instance, the user uses Spotify^{®} instead of Youtube^{®}). Indeed, two applications, even if they belong to a same type of application (for instance, a streaming application) may not have the same sampling rates, and it may be advantageous to reconfigure the Bluetooth audio link so its sampling rate matches the one of the applications currently launched. Such reconfiguration avoids the audio server of the master device 203 to have to resample the audio data, which degrades the audio quality.

In this embodiment, the modification of the configuration of the link / links is implicitly triggered by an action of the user (the change of application).

Referring again to Fig. 3, the user may use a first application for which the audio packets are processed by a first codec at a first sampling rate (e.g. a stereo SBC at a sampling frequency of 48000 Hz and a bit rate of 328 kbps) and sent 301 to the audio slave system 201. When the user launches 302 a new application on the master device 203, the sampling frequency and/or the bit rate of the codec may be changed. After this change, the audio packets are processed by a second codec at a second sampling rate (e.g. a stereo SBC at a sampling frequency of 44100 Hz and a bit rate of 328 kbps).

Figure 4 is a representation of a second possible embodiment of the present invention.

In this embodiment, the operational parameter is a type of application launched on the master device 203, for instance a gaming application (e.g. PlayerUnknown's Battlegrounds^{®} - PUBG, Fortnite^{®}, etc.). A change of the operational parameter is detected when the user starts a given type of application on the master device 203. Indeed, some types of application require specific operating modes: for instance, a low-latency mode may be necessary to have a better gaming experience. Therefore, if the Bluetooth slave system 201 supports such low-latency mode, it is advantageous to reconfigure the link between the master device 203 and the slave system 201 into a low latency configuration.

In this embodiment, the modification of the configuration of the link / links is implicitly triggered by an action of the user (starting a specific type of application).

Before starting the application, the Bluetooth communication link between the master device 203 and the slave system 201 may correspond to a first operating mode (e.g. a standard mode in which the latency between the source and the decoded audio may be relatively high), in which the audio packets are processed by a first codec having a first latency and sent 401 to the audio slave system 201. When the user launches 402 a specific type of application (e.g. gaming) on the master device 203, the codec may be changed to have a second latency which is much lower than the first latency. The audio packets are then processed by the new codec and sent 403 from the master device 203 to the slave system 201.

Such low latency mode may be activated in other situations, for instance, when the operational parameter is a local source of audio data, and when the change of this operational parameter corresponds to a change of application (e.g. switching from music playing to video gaming).

Alternatively or in complement, in such situations, one or several of the following configuration parameters may be modified:
- the maximum number of packet retransmissions may be reduced;
- the MTU may be reduced;
- the maximum Flush Timeout parameter may be reduced.

Of course, more than one configuration parameters may be modified. For instance, it is possible to modify both the MTU and the sampling rate.

Figure 5 is a representation of an example not according to the invention.

In this example, the slave system 201 may consist of a pair of earbuds 201a, 201b.

By default, each earpiece may be configured for outputting respective audio data. For instance, for a stereo audio content, the first earbud 201a may be configured to play audio data relative to one of the two channels (for instance, the right channel), and the second earbud 201b may be configured to play audio data relative to the other one of the two channels (for instance, the left channel).

When two users 501, 502 want to share an audio content with another user 502, each user 501, 502 may use a respective earbud 201a, 201b among the pair of earbuds connected to a master device 203. However, in the default configuration described above, there is a lack of auditory comfort for the users 501, 502, since each user 501, 502 only receives audio content corresponding to one of the two channels.

Therefore, it may be interesting to activate a "sharing mode", in which the audio data sent 503, 504 to each earbud 201a, 201b incorporate stereo data.

For example, in the default configuration, the transmission of audio packets may be performed based on a first codec (e.g. an SBC codec), the right earbud 201a being configured for playing audio data corresponding to the right channel and the left earbud 201b being configured for playing audio data corresponding to the left channel. For instance, the first codec may be a stereo codec in case of a forwarding architecture, or a mono codec in a point-to-multipoint architecture.

In the sharing mode, the transmission of audio packets may be performed based on a second codec (e.g. an SBC codec), wherein each packet includes data corresponding to both of the left and the right channel and is sent 503, 504 to both earbuds 201a and 201b. Therefore, both earbuds 201a and 201b are configured to play a same audio content based on the received packets. The second codec may be a mono codec, or a stereo codec with a same audio content on the two channels. An audio content may correspond for instance to a downmixed channel of a left channel and a corresponding right channel.

In a possible example, the user may select the "sharing mode" on the master device 203 or on the slave system 201. In this case, the modification of the configuration of the link / links is explicitly triggered by an action of the user.

Alternatively, the sharing mode may be automatically activated, for instance, when it is detected that the distance between the two earbuds 201a, 201b is above a predefined threshold.

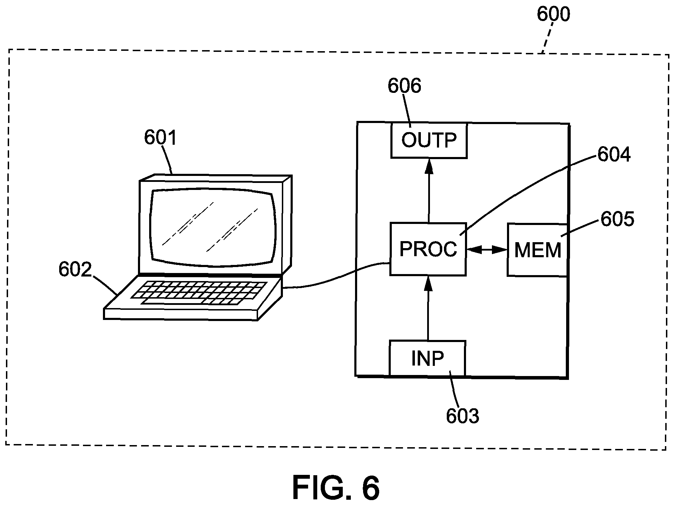

Figure 6 is a possible embodiment for a device that enables the present invention. Such device may be incorporated into the master device or into the slave device.

In this embodiment, the device 600 comprises a computer, this computer comprising a memory 605 to store program instructions loadable into a circuit and adapted to cause circuit 604 to carry out the steps of the present invention when the program instructions are run by the circuit 604.

The memory 605 may also store data and useful information for carrying the steps of the present invention as described above.

The circuit 604 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the invention are described within silicon, or
- a programmable electronic chip such as a FPGA chip (for « Field-Programmable Gate Array »).

This computer may comprise an input interface 603 for receiving information relative to a change of value of an operational parameter in either the Bluetooth device or the second device according to the invention, and an output interface 606 for providing a configuration parameter of the Bluetooth communication link based on a new operating mode.

To ease the interaction with the computer, a screen 601 and a keyboard 602 may be provided and connected to the computer circuit 604.

Furthermore, the block diagram represented in Figure 1 is a typical example of a program which some instructions can be performed by the device described 600. Figure 1 may thus correspond to the flowchart of the general algorithm of a computer program within the meaning of the invention.

In one embodiment of the invention the Bluetooth operation is conducted by a Bluetooth driver stored in a first section of the memory 605, while the operational parameters are determined with an operating system stored in a second section of memory 605. Additionally, the operating system may interface with one or more applications to determine one or more operational parameters, where the application is located in a third section of memory 605. This advantageously separation of these functions allows for independent development of each without the need to alter the other functions at the same time.

Of course, the present invention is not limited to the embodiments described above as examples. It extends to other variants and other situations than those presented above.

For example, when the change of an operational parameter corresponds to a change in an audio source application from a conferencing application to a streaming application, the modification of a configuration parameter may comprise changing a sound quality configuration parameter of an audio codec to a higher quality, wherein the audio codec processes information associated with the streaming application.

The sound quality configuration parameter may be for instance a sampling rate for an audio codec, an audio codec selection parameter, or a configuration parameter changing the channel configuration from mono to stereo.

According to another example, when the change of an operational parameter corresponds to a change in an audio source application from a streaming application to a conferencing application, the modification of a configuration parameter may comprise changing a channel configuration parameter from a unidirectional audio link to a bidirectional audio link.

When the slave system 201 consists in two earbuds 201a, 201b, it can happen that one of the two earbuds is disabled (e.g. if the communication link is interrupted to this earbud). In such a situation, it may be detected that one earbud is deactivated, and the channel configuration may be switched from stereo to mono. The deactivation of one earbud may be performed, for instance, by receiving a message on the master device.

A similar change may be performed when a change in the local source of audio data from a stereo source to a mono source is detected. The wireless communication link may be reconfigured from a stereo link to a mono link in response to said change, and the audio data are then transmitted to the earbuds in mono format.

Depending on the embodiment chosen, certain acts, actions, events or functions of each of the methods described herein may be performed or occur in a different order from that in which they were described, or may be added, merged or not to be performed or not to occur, as the case may be. In addition, in some embodiments, certain acts, actions or events are performed or occur concurrently and not successively.

Although described through a number of detailed exemplary embodiments, the proposed method and equipment for implementing the method include various alternatives, modifications and improvements which will be apparent to those skilled in the art, it being understood that these various variants, modifications and improvements fall within the scope of the invention, as defined by the following claims. In addition, various aspects and features described above may be implemented together, or separately, or substituted for each other, and all of the various combinations and sub-combinations of aspects and features are within the scope of the invention. In addition, some of the systems and equipment described above may not incorporate all of the modules and features described for the preferred embodiments.

## Claims

1. A method for operating a Bluetooth device (700), the method comprising:
transporting (102) audio information over a Bluetooth communication link established (101) with a second device;
determining (104), upon a change (103) of value of an operational parameter in either the Bluetooth device (700) or the second device, a new operating mode for said Bluetooth communication link;
modifying (105) a configuration parameter of said Bluetooth communication link based on the new operating mode;
transporting (102) audio information on said Bluetooth communication link according to the modified configuration parameter;
wherein the operational parameter is a launch (402) of a tagged gaming or real-time video application on the Bluetooth device or the second device and the new operating mode is a low-latency mode.

2. The method of claim 1, wherein the operational parameter is associated with an operating system running on the Bluetooth device (700) or the second device.

3. The method of claim 1, wherein the operational parameter is associated with an application running on the Bluetooth device (700) or the second device.

4. The method of any one of claims 1 to 3, wherein the modifying (105) of the configuration parameter is performed by a Bluetooth Host.

5. The method of any one of claims 1 to 3, wherein the modifying (105) of the configuration parameter is performed by a Bluetooth Controller.

6. The method of any of the preceding claims, wherein the configuration parameter is one of:
an audio configuration parameter, or
a Bluetooth connection parameter.

7. The method of claim 6, wherein the configuration parameter is one audio configuration parameter among:
a type of codec,
a parameter relative to a codec,
a type of data,
an audio channel selection parameter, or
a sampling rate parameter.

8. The method of claim 6, wherein the configuration parameter is one Bluetooth connection parameter among:
a Flush Timeout parameter,
a channel type parameter,
a quality of service parameter,
several retransmission parameter,
a parameter among BLE link parameters,
a packet type parameter, and
a Maximum Transmission Unit, MTU, parameter.

9. A Bluetooth device (700) comprising a Bluetooth chip, a processor and a memory configured to:
transport (102) audio information over a Bluetooth communication link established (101) with a second device;
determine (104), upon a change (103) of value of an operational parameter in either the Bluetooth device (700) or the second device, a new operating mode for said Bluetooth communication link;
modify (105) a configuration parameter of said Bluetooth communication link based on the determined new operating mode;
transport (102) audio information on said Bluetooth communication link according to the modified configuration parameter;
wherein the operational parameter is a launch (402) of a tagged gaming or real-time video application on the Bluetooth device or the second device and the new operating mode is a low-latency mode.

10. The Bluetooth device (700) of claim 9, wherein the operational parameter is associated with an operating system of the Bluetooth device (700) or the second device.

11. The Bluetooth device (700) of claim 9, wherein the operational parameter is associated with an application running on the Bluetooth device (700) or the second device.

12. The Bluetooth device (700) of any of claims 9 to 11, further comprising a Bluetooth Controller and wherein the modifying (105) of the configuration parameter is performed by the Bluetooth Controller.

13. The Bluetooth device (700) of any of claims 9 to 12 wherein the configuration parameter is one of:
an audio configuration parameter, or
a Bluetooth connection parameter.

14. The Bluetooth device (700) of claim 9, wherein the operational parameter is one audio configuration parameter among:
a type of codec,
a parameter relative to a codec,
a type of data,
an audio channel selection parameter, or
a sampling rate parameter.

15. The Bluetooth device (700) as set forth in claim 13, wherein the operational parameter is one Bluetooth connection parameter among:
a Flush Timeout parameter,
a channel type parameter,
a quality of service parameter,
a number of retransmission parameter,
a parameter among BLE link parameters,
a packet type parameter, and
a Maximum Transmission Unit, MTU, parameter.

16. A non-transitory computer readable storage medium, having stored there on a computer program comprising program instructions, the computer program being loadable into a data-processing unit and adapted to cause the data-processing unit to carry out the steps of any of claims 1 to 8 when the computer program is run by the data-processing device.

## Patentansprüche

1. Verfahren zum Betreiben einer Bluetooth-Vorrichtung (700), wobei das Verfahren Folgendes umfasst:
Transportieren (102) von Audioinformationen über eine Bluetooth-Kommunikationsverbindung, die mit einer zweiten Vorrichtung hergestellt wurde (101);
Bestimmen (104) eines neuen Betriebsmodus für die Bluetooth-Kommunikationsverbindung bei einer Änderung (103) des Wertes eines Betriebsparameters entweder in der Bluetooth-Vorrichtung (700) oder der zweiten Vorrichtung;
Modifizieren (105) eines Konfigurationsparameters der Bluetooth-Kommunikationsverbindung basierend auf dem neuen Betriebsmodus;
Transportieren (102) von Audioinformationen auf der Bluetooth-Kommunikationsverbindung gemäß dem modifizierten Konfigurationsparameter;
wobei der Betriebsparameter ein Start (402) einer markierten Spiel- oder Echtzeit-Videoanwendung auf der Bluetooth-Vorrichtung oder der zweiten Vorrichtung ist und der neue Betriebsmodus ein Modus mit niedriger Latenzzeit ist.

2. Verfahren nach Anspruch 1, wobei der Betriebsparameter einem auf der Bluetooth-Vorrichtung (700) oder der zweiten Vorrichtung laufenden Betriebssystem zugeordnet ist.

3. Verfahren nach Anspruch 1, wobei der Betriebsparameter einer auf der Bluetooth-Vorrichtung (700) oder der zweiten Vorrichtung laufenden Anwendung zugeordnet ist.

4. Verfahren nach einem der Ansprüche 1 bis 3, wobei das Modifizieren (105) des Konfigurationsparameters durch einen Bluetooth-Host durchgeführt wird.

5. Verfahren nach einem der Ansprüche 1 bis 3, wobei das Modifizieren (105) des Konfigurationsparameters durch eine Bluetooth-Steuerung durchgeführt wird.

6. Verfahren nach einem der vorhergehenden Ansprüche, wobei der Konfigurationsparameter einer von Folgenden ist:
ein Audiokonfigurationsparameter oder
einen Bluetooth-Verbindungsparameter.

7. Verfahren nach Anspruch 6, wobei der Konfigurationsparameter ein Audiokonfigurationsparameter unter Folgendem ist:
einem Typ von Codec,
einem Parameter relativ zu einem Codec,
einem Typ von Daten,
einem Audiokanal-Auswahlparameter oder
einem Abtastratenparameter.

8. Verfahren nach Anspruch 6, wobei der Konfigurationsparameter ein Bluetooth-Verbindungsparameter unter Folgendem ist:
einem Flush-Timeout-Parameter,
einem Kanaltyp-Parameter,
einem Dienstqualitätsparameter,
mehreren Weitersendungsparametern,
einem Parameter unter BLE-Verknüpfungsparametern,
einem Pakettyp-Parameter und
einem Maximum-Transmission-Unit-, MTU-, Parameter.

9. Bluetooth-Vorrichtung (700), umfassend einen Bluetooth-Chip, einen Prozessor und einen Speicher, konfiguriert zum:
Transportieren (102) von Audioinformationen über eine Bluetooth-Kommunikationsverbindung, die mit einer zweiten Vorrichtung hergestellt wurde (101);
Bestimmen (104) eines neuen Betriebsmodus für die Bluetooth-Kommunikationsverbindung bei einer Änderung (103) des Wertes eines Betriebsparameters entweder in der Bluetooth-Vorrichtung (700) oder der zweiten Vorrichtung;
Modifizieren (105) eines Konfigurationsparameters der Bluetooth-Kommunikationsverbindung basierend auf dem bestimmten neuen Betriebsmodus;
Transportieren (102) von Audioinformationen auf der Bluetooth-Kommunikationsverbindung gemäß dem modifizierten Konfigurationsparameter;
wobei der Betriebsparameter ein Start (402) einer markierten Spiel- oder Echtzeit-Videoanwendung auf der Bluetooth-Vorrichtung oder der zweiten Vorrichtung ist und der neue Betriebsmodus ein Modus mit niedriger Latenzzeit ist.

10. Bluetooth-Vorrichtung (700) nach Anspruch 9, wobei der Betriebsparameter einem Betriebssystem der Bluetooth-Vorrichtung (700) oder der zweiten Vorrichtung zugeordnet ist.

11. Bluetooth-Vorrichtung (700) nach Anspruch 9, wobei der Betriebsparameter einer auf der Bluetooth-Vorrichtung (700) oder der zweiten Vorrichtung laufenden Anwendung zugeordnet ist.

12. Bluetooth-Vorrichtung (700) nach einem der Ansprüche 9 bis 11, ferner umfassend eine Bluetooth-Steuerung und wobei das Modifizieren (105) des Konfigurationsparameters durch die Bluetooth-Steuerung durchgeführt wird.

13. Bluetooth-Vorrichtung (700) nach einem der Ansprüche 9 bis 12, wobei der Konfigurationsparameter einer von Folgenden ist:
ein Audiokonfigurationsparameter oder
einen Bluetooth-Verbindungsparameter.

14. Bluetooth-Vorrichtung (700) nach Anspruch 9, wobei der Betriebsparameter ein Audiokonfigurationsparameter unter Folgendem ist:
einem Typ von Codec,
einem Parameter relativ zu einem Codec,
einem Typ von Daten,
einem Audiokanal-Auswahlparameter oder
einem Abtastratenparameter.

15. Bluetooth-Vorrichtung (700) nach Anspruch 13, wobei der Betriebsparameter ein Bluetooth-Verbindungsparameter unter Folgendem ist:
einem Flush-Timeout-Parameter,
einem Kanaltyp-Parameter,
einem Dienstqualitätsparameter,
einer Anzahl von Weitersendungsparametern,
einem Parameter unter BLE-Verknüpfungsparametern,
einem Pakettyp-Parameter und
einem Maximum-Transmission-Unit-, MTU-, Parameter.

16. Nichttransitorisches computerlesbares Speichermedium, das ein darauf gespeichertes Computerprogramm, das Programmanweisungen umfasst, aufweist, wobei das Computerprogramm in eine Datenverarbeitungseinheit geladen werden kann und dafür ausgelegt ist, die Datenverarbeitungseinheit zu veranlassen, die Schritte eines der Ansprüche 1 bis 8 durchzuführen, wenn das Computerprogramm durch die Datenverarbeitungsvorrichtung ausgeführt wird.

## Revendications

1. Procédé de fonctionnement d'un dispositif Bluetooth (700), le procédé comprenant :
le transport (102) d'informations audio sur une liaison de communication Bluetooth établie (101) avec un second dispositif ;
la détermination (104), lors d'un changement (103) de valeur d'un paramètre opérationnel soit dans le dispositif Bluetooth (700) soit dans le second dispositif, d'un nouveau mode de fonctionnement pour ladite liaison de communication Bluetooth ;
la modification (105) d'un paramètre de configuration de ladite liaison de communication Bluetooth en fonction du nouveau mode de fonctionnement ;
le transport (102) d'informations audio sur ladite liaison de communication Bluetooth selon le paramètre de configuration modifié ;
dans lequel le paramètre opérationnel est un lancement (402) d'une application de jeu ou de vidéo en temps réel balisée sur le dispositif Bluetooth ou le second dispositif et le nouveau mode de fonctionnement est un mode à faible latence.

2. Procédé selon la revendication 1, dans lequel le paramètre opérationnel est associé à un système d'exploitation s'exécutant sur le dispositif Bluetooth (700) ou le second dispositif.

3. Procédé selon la revendication 1, dans lequel le paramètre opérationnel est associé à une application s'exécutant sur le dispositif Bluetooth (700) ou le second dispositif.

4. Procédé selon l'une quelconque des revendications 1 à 3, dans lequel la modification (105) du paramètre de configuration est effectuée par un hôte Bluetooth.

5. Procédé selon l'une quelconque des revendications 1 à 3, dans lequel la modification (105) du paramètre de configuration est effectuée par un dispositif de commande Bluetooth.

6. Procédé selon l'une quelconque des revendications précédentes, dans lequel le paramètre de configuration est l'un :
d'un paramètre de configuration audio, ou
d'un paramètre de connexion Bluetooth.

7. Procédé selon la revendication 6, dans lequel le paramètre de configuration est un paramètre de configuration audio parmi :
un type de codec,
un paramètre relatif à un codec,
un type de données,
un paramètre de sélection de canal audio, ou
un paramètre de taux d'échantillonnage.

8. Procédé selon la revendication 6, dans lequel le paramètre de configuration est un paramètre de connexion Bluetooth parmi :
un paramètre de délai d'expiration de vidage,
un paramètre de type de canal,
un paramètre de qualité de service,
plusieurs paramètres de retransmission,
un paramètre parmi des paramètres de liaison BLE,
un paramètre de type de paquet, et
un paramètre d'unité de transmission maximale, MTU.

9. Dispositif Bluetooth (700) comprenant une puce Bluetooth, un processeur et une mémoire configurés pour :
le transport (102) d'informations audio sur une liaison de communication Bluetooth établie (101) avec un second dispositif ;
la détermination (104), lors d'un changement (103) de valeur d'un paramètre opérationnel soit dans le dispositif Bluetooth (700) soit dans le second dispositif, d'un nouveau mode de fonctionnement pour ladite liaison de communication Bluetooth ;
la modification (105) d'un paramètre de configuration de ladite liaison de communication Bluetooth en fonction du nouveau mode de fonctionnement déterminé ;
le transport (102) d'informations audio sur ladite liaison de communication Bluetooth selon le paramètre de configuration modifié ;
dans lequel le paramètre opérationnel est un lancement (402) d'une application de jeu ou de vidéo en temps réel balisée sur le dispositif Bluetooth ou le second dispositif et le nouveau mode de fonctionnement est un mode à faible latence.

10. Dispositif Bluetooth (700) selon la revendication 9, dans lequel le paramètre opérationnel est associé à un système d'exploitation du dispositif Bluetooth (700) ou du second dispositif.

11. Dispositif Bluetooth (700) selon la revendication 9, dans lequel le paramètre opérationnel est associé à une application s'exécutant sur le dispositif Bluetooth (700) ou le second dispositif.

12. Dispositif Bluetooth (700) selon l'une quelconque des revendications 9 à 11, comprenant également un dispositif de commande Bluetooth et dans lequel la modification (105) du paramètre de configuration est effectuée par le dispositif de commande Bluetooth.

13. Dispositif Bluetooth (700) selon l'une quelconque des revendications 9 à 12, dans lequel le paramètre de configuration est l'un :
d'un paramètre de configuration audio, ou
d'un paramètre de connexion Bluetooth.

14. Dispositif Bluetooth (700) selon la revendication 9, dans lequel le paramètre opérationnel est un paramètre de configuration audio parmi :
un type de codec,
un paramètre relatif à un codec,
un type de données,
un paramètre de sélection de canal audio, ou
un paramètre de taux d'échantillonnage.

15. Dispositif Bluetooth (700) selon la revendication 13, dans lequel le paramètre opérationnel est un paramètre de connexion Bluetooth parmi :
un paramètre de délai d'expiration de vidage,
un paramètre de type de canal,
un paramètre de qualité de service,
un certain nombre de paramètres de retransmission,
un paramètre parmi des paramètres de liaison BLE,
un paramètre de type de paquet, et
un paramètre d'unité de transmission maximale, MTU.

16. Support de stockage non transitoire lisible par ordinateur, sur lequel est stocké un programme informatique comprenant des instructions de programme, le programme informatique pouvant être chargé dans une unité de traitement de données et étant adapté pour amener l'unité de traitement de données à réaliser les étapes selon l'une quelconque des revendications 1 à 8 lorsque le programme informatique est exécuté par le dispositif de traitement de données.
